# EUROPÄISCHE PATENTSCHRIFT

(11) **EP 4 298 066 B1**
(45) Veröffentlichungstag und Bekanntmachung des Hinweises auf die Patenterteilung: **23.10.2024**
(21) Anmeldenummer: 22712445.0
(22) Anmeldetag: 22.02.2022
(51) Int. Cl.: C03B 19/10, C03C 1/00, B09B 3/29, B09B 3/40, C21B 3/08, C03C 6/10, C21B 3/06

(54) **VERFAHREN ZUM VERARBEITEN EINER NICHTMETALLISCHEN SCHMELZE**
PROCESS FOR PROCESSING A NON-METALLIC MELT
PROCÉDÉ DE TRAITEMENT D'UNE MASSE FONDUE NON MÉTALLIQUE

(30) Priorität: 23.02.2021 AT 392021
(43) Veröffentlichungstag der Anmeldung: 03.01.2024
(73) Patentinhaber: Radmat AG, 5442 Fislisbach (CH)
(72) Erfinder: EDLINGER, Alfred, 6781 Bartholomäberg (AT)
(74) Vertreter: SONN Patentanwälte GmbH & Co KG
(86) Internationale Anmeldenummer: PCT/IB2022/051537
(87) Internationale Veröffentlichungsnummer: WO 2022/180506

(56) Entgegenhaltungen:
- WO-A1-2014/032843
- WO-A1-2020/124105
- DE-A1- 102005 053 526
- DE-A1- 4 234 385

## Beschreibung

Die Erfindung betrifft ein Verfahren zum Verarbeiten einer nichtmetallischen Schmelze, wie z.B. Schlacke, zu amorphem Material, bei welchem die Schmelze durch Kühlen verglast wird, wobei die Schmelze zum Verglasen mit einem Metallbad in Kontakt gebracht und anschließend als amorphes Material aus dem Metallbad ausgebracht wird, wobei die Schmelze über ein offenes Ende eines in das Metallbad eintauchenden Tauchrohrs in das Metallbad eingebracht wird und im Metallbad, bevorzugt mittels eines mechanischen Desintegrators, bevorzugt Rotors, aus dem Bereich des offenen Endes des Tauchrohrs gefördert wird.

Ein solches Verfahren ist in der WO 2020/124105 A1 beschrieben und dient der raschen Abkühlung mineralischer Schmelzen unter deren Rekristallisationspunkt, um ein hochgradig amorphes Produkt für die Verwendung in der Zementindustrie zu erhalten, ohne dass chemisch belastete Dämpfe und insbesondere keine korrosiven Dämpfe entstehen.

DE102005053526 A1, WO2014032843 A1 und DE4234385 A1 offenbaren die Pyrolyse organischer Abfälle in flüssigem Zinn, welches zu diesem Zweck beheizt wird.

Das Vorsehen eines Metallbads zum Kühlen der Schmelzen hat gegenüber der Verwendung wässriger Kühlmedien den Vorteil, dass bei den bei der Verarbeitung von Schmelzen wie Hochofenschlacke üblichen Temperaturen keine Verdampfung des Kühlmediums auftritt. Dies hat im Vergleich zur Verwendung von wässrigen Kühlmedien, die an der Oberfläche des schnell zu kühlenden Materials in die Dampfphase übergehen (Leidenfrost-Effekt), einen weitaus besseren Wärmeübergang von der Schmelze in das Metall als Kühlmedium zur Folge, sodass eine überaus rasche Kühlung unter den Rekristallisationspunkt der Schmelze erfolgt. Die Verwendung von Metall als Kühlmedium zeichnet sich dadurch aus, dass keine oder keine nennenswerte Dampfentwicklung zu beobachten und das Verfahren daher einfach handzuhaben und mit geringem anlagentechnischen Aufwand zu realisieren ist.

Dadurch, dass die Schmelze mittels eines Tauchrohrs in die Tiefe des Metallbads eingebracht und aus dem Bereich des offenen Endes des Tauchrohrs entfernt wird, wobei dies bevorzugt im Sinne einer Zwangsförderung und weiters bevorzugt mittels eines mechanischen Desintegrators erfolgt, wird ein überaus feinteiliges amorphes Material als Produkt erhalten. In der Tiefe des Metallbads herrschen aufgrund der Förderarbeit, die zum Fördern der amorph erstarrten Schmelzen in das Bad eingebracht wird, starke, mitunter turbulente Strömungsverhältnisse, sodass die Schmelze starken Scherkräften ausgesetzt wird. Dies führt zu einer starken Zerkleinerung der eingebrachten Schmelze, die durch die bevorzugt mechanisch erfolgende Förderung des amorphen Materials aus dem Bereich des offenen Endes des Tauchrohrs noch weiter vorangetrieben werden kann. Die im Metallbad rasch abkühlende Schmelze kann aufgrund der Förderwirkung nicht mehr in den Bereich des offenen Endes des Tauchrohrs gelangen, wodurch nachfließende Schmelze konstant in das Metallbad eingebracht werden kann. Das aus der Schmelze gebildete amorphe Material wird in der Folge aufgrund seiner geringen Dichte neben dem Tauchrohr durch das Metallbad zur Oberfläche steigen und sich dort ansammeln. Mit ständig nachfließender Schmelze wird sich das amorphe Material an der Oberfläche immer weiter ansammeln und durch aus dem Metallbad nachsteigendes amorphes Material aufgeschichtet und kann schließlich ausgetragen werden.

Für die Zwecke der vorliegenden Erfindung umfasst der Begriff "nichtmetallische Schmelzen" mineralische Schmelzen, Hochofenschlacke, Stahlschlacke gegebenenfalls versetzt mit SiO₂ zur Basizitätsabsenkung, künstliche Schlacken aus Mergel, Zementofen-Bypass-Stäube, Müllverbrennungsschlacke, nichteisenmetallurgische Schlacken, Schmelzkammerschlacken aus kalorischen Kraftwerken, Kupolofenschlacken, Tonerdeschmelzzementschmelzen, Altglasschmelzen, künstliche Puzzolanschmelzen, industrielle Staubschmelzen, wie beispielsweise Schlackenschmelzen aus getrocknetem Klärschlamm und dergleichen. Weiters sind Glas- und Keramikschmelzen ein geeignetes Ausgangsmaterial und das Verfahren kann zur Herstellung von Mikrogranulat aus Glas- oder Keramikkugeln ausgeführt werden.

Bei dem Verfahren gemäß der WO 2020/124105 A1 kann das Metallbad auf einer unterhalb der Rekristallisationstemperatur der Schmelze liegenden Temperatur, insbesondere bei einer Temperatur von zwischen 300°C und 600°C, gehalten werden, indem die durch die Schmelze in das Metallbad eingebrachte Wärme mittels eines durch einen Wärmetauscher strömenden Kühlmittels abgeführt wird. Das erwärmte Kühlmittel kann genutzt werden, um externen Prozessen thermische Energie zuzuführen.

Die vorliegende Erfindung zielt nun darauf ab, die in das Metallbad eingebrachte Energie für die Aufarbeitung von Altstoffen nutzbar zu machen, ohne dass es eines Übertragungsmediums, wie z.B. eines Kühlmittels bedarf. Beispielsweise fallen große Mengen von Altstoffen in Form von Klärschlämmen an, die aufgrund des hohen organischen und anorganischen Schadstoffpotentiales nicht mehr als "natürlicher" Dünger verwendet werden können und daher oft deponiert oder thermisch entsorgt werden müssen. Dabei gehen viele wertvolle Düngemittelkomponenten wie P, N, K, SiO₂ und CaO verloren.

Zur Lösung dieser Aufgabe ist ein Verfahren der eingangs genannten Art erfindungsgemäß dadurch gekennzeichnet, dass die durch die Schmelze in das Metallbad eingebrachte Wärme zur Pyrolyse wenigstens eines organikahältigen Altstoffs genutzt und dadurch abgeführt wird. Die vorzugsweise ohne Wärmeübertragungsmedium erfolgende direkte Nutzung der durch die Schmelze in das Metallbad eingebrachten Wärme für ein Pyrolyseverfahren erlaubt es, verschiedenste organikahältige Altstoffe in energetisch günstiger Weise einer wirtschaftlich und ökologisch sinnvollen Verwertung zuzuführen. Beispielsweise wird dadurch die Möglichkeit geschaffen, Klärschlamm zu Pflanzenkohle und Pyrolysegas umzuwandeln. Pflanzenkohle kann für die Herstellung von Schwarzerde oder Terra Preta verwendet werden. Pflanzenkohle kann in der Landwirtschaft als Bodenverbesserer und Trägerstoff für Düngemittel sowie als Hilfsstoff für die Kompostierung und Nährstofffixierung von Gülle eingesetzt werden. Pflanzenkohle wird auch als Futtermittelzusatz und Nahrungsergänzungsmittel verwendet. Bei der Verwendung als Bodenverbesserer kommt Pflanzenkohle eine wichtige Funktion zur Kompensation der Kohlendioxid-Emissionen in Anbetracht der globalen Erwärmung zu. Pflanzenkohle kann aber auch als Dämmstoff in der Gebäudekonstruktion, in der Abwasser- und Trinkwasserbehandlung, als Abgasfilter und in der Textilindustrie verwendet werden.

Mit dem erfindungsgemäßen Verfahren können neben oder statt Klärschlamm auch verschiedene andere organikahältige Altstoffe der Pyrolyse zugeführt werden, wie z.B. Schadholz, Altholz, Altkunststoffe, Shredder-Leichtfraktion, Biomasse, Altreifen, metallhaltiger Schrott und Elektronikschrott.

Die Wärmeübertragung vom Metallbad auf die zu pyrolysierenden Altstoffe kann entweder direkt oder indirekt, jedenfalls aber ohne Verwendung eines gesonderten Wärmeübertragungsfluids erfolgen.

Für die indirekte Wärmeübertragung sieht eine bevorzugte Ausbildung der Erfindung vor, dass der wenigstens eine organikahältige Altstoff durch wenigstens ein das Metallbad durchsetzendes Rohr gefördert wird. Die das Metallbad durchquerenden Rohre wirken hierbei als Wärmetauscher, wobei die Wärme des Metallbades durch die Rohrwände hindurch auf die in den Rohren geförderten Altstoffe übertragen wird, sodass die Altstoffe während ihres Transports durch die Rohre pryolysiert werden. Die Förderung der Altstoffe kann hierbei bevorzugt mittels sich durch die Rohre erstreckender Förderschnecken erfolgen. Es kann sich eine Mehrzahl von bevorzugt parallel verlaufenden Rohren durch das Metallbad erstrecken, um auf diese Weise die je Zeiteinheit pyrolysierte Altstoffmenge zu erhöhen.

Für die direkte Wärmeübertragung sieht eine bevorzugte Ausbildung der Erfindung vor, dass der wenigstens eine organikahältige Altstoff über ein in das Metallbad eintauchendes Tauchrohr in das Metallbad eingebracht und das im Metallbad entstehende Pyrolysat über ein in das Metallbad eintauchendes Steigrohr ausgetragen wird. Das direkte Inkontaktbringen der Altstoffe mit dem Metallbad führt aufgrund der sehr günstigen Oberflächenverhältnisse zu einer sehr raschen Pyrolyse. Das Pyrolysat und die Pyrolysegase werden über das Steigrohr nach oben abgezogen, da die Dichte des Pyrolysegutes wesentlich geringer ist als die des Metallbades. Darüber hinaus sorgt die Durchgasung des stark reduzierend wirkenden Pyrolysegases zu einer sehr vorteilhaften Durchmischung der zu pyrolysierenden Altstoffen mit dem Metallbad. Im Falle der Verwendung eines Zinnbads wird die Bildung von stark störenden Zinnoxiden (ZnO, Zn02) hierbei aufgrund des großen Reduktionspotentiales des Pyrolysegases vermieden.

Eine bevorzugte Ausbildung sieht hierbei vor, dass das Steigrohr das Tauchrohr konzentrisch umgibt und an seinem in das Metallbad eintauchenden Ende eine, insbesondere glocken- oder trichterförmige, Durchmessererweiterung aufweist. Durch die konstruktive Ausbildung einer Glocke oder eines Trichters am unteren Ende des Steigrohres werden das Pyrolysegut und das Pyrolysegas unter Ausnutzung der Differenz des spezifischen Gewichts relativ zum Metallbad in einfacher Weise abgezogen. Zur Unterstützung des vertikalen Abzugs kann über einen Saugzug zusätzlich eine Druckdifferenz aufgebaut werden.

Beim direkten Kontakt eines Metallbestandteile aufweisenden Altstoffs mit dem Metallbad, insbesondere Zinnbad, können allenfalls sich im Metall- bzw. Zinnbadlösenden Metalle durch Saigerung extrahiert werden. Das gilt insbesondere für eisen. Im Falle eines Zinnbads sammeln sich Metalle und anorganische Verbindungen der Altstoffe, die schwerer als Sn sind, nicht benetzbar sind und nicht aufgeschmolzen werden, unterhalb des Tauchrohres an und können von dort mechanisch vom Zinnbad abgetrennt werden.

Die Temperatur des Metallbades wird bevorzugt in einem Bereich gehalten, welcher einerseits das rasche Unterschreiten der Rekristallisationstemperatur der Schmelze und andererseits ein ausreichendes Temperaturniveau für die Pyrolyse sicherstellt. Insbesondere wird das Metallbad auf einer Temperatur von 300-600°C gehalten.

Diese Temperatur liegt je nach Zusammensetzung der Schmelze unterhalb der Rekristallisationstemperatur, wobei in diesem Temperaturbereich auch bei unregelmäßiger Einbringung der Schmelze weder ein Erstarren des Metallbades zu befürchten ist noch eine für eine ausreichende rasche Kühlung nachteilig hohe Temperatur des Metallbads in Kauf genommen werden muss.

Um die Temperatur des Metallbads im angegebenen Bereich zu halten, ist bevorzugt vorgesehen, dass die Badtemperatur gemessen und die Messwerte einer Steuerung zugeführt werden, welche die Menge der je Zeiteinheit in das Metallbad eingebrachten Schmelze und/oder die Menge des je Zeiteinheit in direkten oder indirekten Kontakt mit dem Metallbad gebrachten, zu pyrolysierenden Altstoffs eingestellt wird.

Für das Metallbad kommt eine Reihe von Metallen in Frage, wobei allgemein Metalle mit niedrigem Schmelzpunkt und hohem Siedepunkt günstig für die Verwendung im Rahmen der vorliegenden Erfindung sind. Ein niedriger Schmelzpunkt gestattet es, ein im Vergleich zu den eingebrachten Schmelzen sehr kühles Metallbad zur Verfügung zu stellen und ein hoher Siedepunkt verhindert Verdampfungsverluste aus dem Metallbad und damit einhergehend die Entwicklung von gesundheits- und umweltschädlichen Dämpfen. Unter diesem Aspekt ist das Verfahren gemäß der vorliegenden Erfindung bevorzugt dahingehend weitergebildet, dass das Metallbad aus Zinn gebildet wird, das bevorzugt mit bis zu 3 Gew.-% Silber und ggf. mit bis zu 1 Gew.-% Kupfer legiert ist. Zinn weist einen Schmelzpunkt von 231,93°C auf und der Siedepunkt liegt bei 2620°C, weswegen ein breiter Temperaturbereich für die Kühlung von beispielsweise Schlacke ohne die Gefahr der Verdampfung des Metalls genutzt werden kann. Die nichtmetallischen Schmelzen, die im Rahmen der vorliegenden Erfindung zu amorphem Granulat verarbeitet werden, werden bevorzugt mit ungefähr 1350°C bis 1850°C eingebracht, sodass eine Temperaturdifferenz von etwa 1200°C für die rasche Kühlung der Schmelze zu amorphem Material zur Verfügung steht. Wenn das Zinnbad weiters mit Silber und Kupfer legiert ist, kann der Schmelzpunkt sogar auf bis zu 219°C gesenkt werden und die Oxidationsaktivität des Metallbades wird vermindert.

Eine bevorzugte Ausbildung der Erfindung, welche insbesondere im Falle der in den das Metallbad durchsetzenden Rohre durchgeführten Pyrolyse zum Einsatz kommt, sieht vor, dass dem wenigstens einen organikahältigen Altstoff vor der Pyrolyse Wasser oder Wasserdampf zugegeben wird, sodass die Pyrolyse als Hydropyrolyse vorgenommen wird und das Pyrolysegut Synthesegas enthaltend H₂, CO, CO₂ und ggf. NH₃ umfasst. Hierbei kann die Hydropyrolyse (auch Pyrohydrolyse) auch unter einem erhöhten Druck vorgenommen werden, was in den das Metallbad durchsetzenden Rohren durch entsprechende Druckerhöhungsmittel gelingt. Dabei entstehen keine Pyrolse-Gase, -Öle oder -Teer, da durch Zugabe von Wasser bzw. Wasserdampf direkt H₂, CO und CO₂ (ggf. neben NH₃) gebildet werden. Dieses Synthesegas (Wassergas) kann in einer exothermen homogenen Wassergas-Shift-Reaktion direkt zu Sauergas (H₂ + CO₂) konvertiert werden. Bei Anwesenheit von NH₃ bildet sich mit dem CO₂ des Sauergases (NH₄)₂CO₃ (Ammoniumcarbonat), welches leicht zu Harnstoff weiterprozessiert werden kann. Bei Anwesenheit von Schwefeloxiden bilden sich die entsprechenden Ammonsulfide/sulfite. Diese Hydropyrolyse kann aber auch durch geeignete Wahl von Temperatur, Druck und Wassergehalt zu niedermolekularen Verbindungen (Kohlewasserstoffe, Alkohole, Chemierohstoffe) führen. Eine weitere interessante Anwendung ist die Zugabe von Wasserstoff, wodurch hochhydrierte Produkte entstehen, die z.B. als synthetischer Kraftstoff Anwendung finden. Gemische von Wasserdampf und Wasserstoff sind hier als Reaktionspartner ebenfalls möglich, um gezielt die Produktqualität des Pyrolysates zu definieren.

Bei der Pyrolyse von Klärschlamm entsteht in einem endothermen Vorgang hochwertige Pflanzenkohle und ein Pyrolysegas, bestehend aus Ammoniak neben organikahältigen Gasbestandteilen (nieder- und hochsiedend). Nach Abtrennung des wertvollen NH₃ kann dieses Gas bevorzugt direkt thermisch verwertet oder zu Sauergas (CO₂+H₂) exotherm konvertiert werden (homogene Wassergas-Shift-Reaktion). Dies insbesondere um die Kondensation der teerartigen, hocharomatischen und kanzerogenen Bestandteile des Pyrolysegases durch Vergasung zu vermeiden.

Bei der Pyrolyse von metallhaltigen Altstoffen entsteht ein Pyrolysekoks, der leicht durch mechanisches Auftrennen in eine metallhaltige Fraktion getrennt werden kann. Durch Erhitzen des Pyrolysekoks auf 1200°C unter reduzierenden Bedingungen werden mögliche Metalloxide, wie z.B. Zn, Cu, Pb, Ni und Fe, metallisiert und können so einfach von der Kohlenstoffmatrix entfernt werden. Halogenide dieser Metalle verdampfen und können aus der Gasphase gewonnen werden.

Die Entfernung der anorganischen Metallverbindungen durch Erhitzen oder Verdampfen führt dazu, dass der so gewonnene Pyrolysekoks weitgehend schadstofffrei ist. Dieser Reduktionsvorgang kann durch Aufgabe des heißen Pyrolysekoks in ein z.B. 1250°C heißes Metallbad, insbesondere Zinnbad geschehen. Bevorzugt wird hierzu ein dem Metallbad vorgeordnetes Reaktiv-Metallbad verwendet, welches eine gegenüber dem Metallbad wesentlich höhere Temperatur aufweist. Das Reaktiv-Metallbad kann auch für die Verarbeitung der Schmelze genutzt werden, indem die Schmelze dem vorgeschalteten Reaktiv-Metallbad, bevorzugt Reaktiv-Zinnbad, aufgegeben wird, wobei das Reaktiv-Metallbad durch Zugabe von Reaktivkomponenten ausgewählt aus der Gruppe bestehend aus Kalkträgern und SiO2-Trägern zur Einstellung der Basizität (CaO/SiO₂) der Schmelze auf eine Zielbasizität von 0,85 bis 1,6, bevorzugt 1,3 bis 1,6, bereitet wird.

Das von anorganischen Metallverbindungen befreite Hochtemperaturpyrolysat kann mit Vorteil z.B. in einer induktiv erhitzten Reduktionsvorrichtung gemäß WO 2006/079132 A1, in einem Niederschachtofen ("Wöhlerofen"), in einer Vorrichtung gemäß WO 2018/091959, in einem Schachtofen oder in einem modifizierten Kupolofen reduziert werden, da hier praktisch metallfreies Pyrolysat vorliegt. Insbesondere kann daraus elementarer Phosphor neben CO und Zementschlacke gewonnen werden, da die Bildung von Eisenphosphiden (Fe₂P) aufgrund der selektiven Eisenmetallisierung (1250°C, Reduktion durch den Pyrolysekoks) praktisch ausgeschlossen ist. Dies ist bedeutungsvoll hinsichtlich der CO₂-Bilanz, da hier grüne "Biokohle", also CO₂-neutral, verwendet wird. Das bei der Reduktion entstehende CO kann über die homogene Wassergasreaktion in Synthesegas umgesetzt und zu H₂ und CO₂ (Sauergas) umgesetzt werden.

Die Trennung des Pyrolysegases vom festen Pyrolysat kann in einer separaten Kammer erfolgen, welche der Pyrolyse nachgeordnet ist, wobei ein Teil des Pyrolysegases zur Aufrechterhaltung des metallischen Charakters des Metallbades, insbesondere Zinnbades durch dieses geleitet werden kann, wodurch die Bildung von SnO/SnO₂ vermieden werden kann. Dabei werden ebenfalls in vorteilhafter Weise die Metalloxide unedler als Sn in der aufgegebenen Schmelze, wie z.B. Schlackenschmelzen, reduziert und metallisiert.

Zur Einbringung von Scherkräften auf die in das Metallbad eingebrachte Schmelze, ist bevorzugt vorgesehen, dass die Schmelze zumindest teilweise mittels eines über eine Lanze in das Metallbad eingebrachten Gasstroms aus dem Bereich des offenen Endes des Tauchrohrs gefördert wird.

Bevorzugt erfolgt das Zerteilen der Schmelze durch die kombinierte Wirkung des eingebrachten Gasstroms und der mechanischen Förderung bzw. Desintegration der Schmelze, wobei die mechanische Förderung wie erwähnt bevorzugt durch einen mechanischen Desintegrator erfolgt.

Gemäß einer bevorzugten Ausführungsform der vorliegenden Erfindung wird das erfindungsgemäße Verfahren dahingehend weitergebildet, dass die Schmelze zumindest teilweise mittels eines Gasstroms aus einer im Inneren des Tauchrohrs geführten und in das Metallbad eintauchenden Lanze aus dem Bereich des offenen Endes des Tauchrohrs gefördert wird, wobei bevorzugt im Metallbad im Bereich der Mündung der Lanze Führungseinbauten zur Lenkung einer Strömung angeordnet sind. Aus der Lanze kann ein Gasstrom aus Inertgasen wie Stickstoff, CO₂ oder Ar und/oder aus reaktiven Gasen wie H₂, NH₃ oder CO in den Bereich des offenen Endes und in die oberste Schicht des Metallbades sowie durch die Führungseinbauten ausgestoßen werden, um durch den entstehenden Sog die Schmelze in das Metallbad zu fördern und gleichzeitig hohen Scherkräften zur Zerkleinerung auszusetzen. Durch die entstehende Strömung wird das gebildete amorphe Material bzw. Granulat aus dem Bereich des offenen Endes des Tauchrohrs gefördert.

Gemäß einer weiters bevorzugten Ausführungsform der vorliegenden Erfindung wird das erfindungsgemäße Verfahren dahingehend weitergebildet, dass die Schmelze zumindest teilweise mittels eines Gasstroms, der aus einer aus dem Metallbad zum offenen Ende des in das Metallbad eintauchenden Tauchrohrs gerichteten Lanze kommt, aus dem Bereich des offenen Endes des Tauchrohrs gefördert wird, wobei bevorzugt im Metallbad im Bereich der Mündung der Lanze Führungseinbauten zur Lenkung einer Strömung angeordnet sind. Aus der Lanze kann ein Gasstrom aus Inertgasen wie Stickstoff, CO₂ oder Ar und/oder aus reaktiven Gasen wie H₂, NH₃ oder CO durch die Führungseinbauten in den Bereich des offenen Endes und in die oberste Schicht des Metallbades ausgestoßen werden, um durch den entstehenden Sog die Schmelze in das Metallbad zu fördern und gleichzeitig hohen Scherkräften zur Zerkleinerung auszusetzen. Durch die entstehende Strömung wird das gebildete amorphe Material bzw. Granulat aus dem Bereich des offenen Endes des Tauchrohrs gefördert. Das Metallbad kann auch induktiv gerührt oder an exponierte Stellen gepumpt werden.

Wie bereits erwähnt, kann die Basizität der Schmelze im vorgeschalteten Reaktiv-Metallbad durch Zugabe von Kalkträgern und/oder SiO₂-Trägern eingestellt werden. Die Anpassung der Basizität, dem Verhältnis von CaO zu SiO₂, in der Schmelze, wie beispielsweise der Eduktschlackenschmelze, ist für die Viskosität und damit für das Zerteilungsverhalten der in das für die Kühlung bzw. Verglasung vorgesehene Metallbad eingebrachten Schmelze von größter Bedeutung, da beispielsweise bei einer Basizität von ungefähr 1,9 Schlackenschmelze hochviskos wird und im Metallbad praktisch nicht mehr granulierbar ist. Im Falle von Schlackenschmelzen liegt die Ausgangsbasizität mitunter im Bereich von 3, sodass eine Ansäuerung der Schmelze mit SiO₂-Trägern, notwendig ist. Ausgehend von der Art der Schmelze und dessen Basizität kann jedoch auch eine Anhebung der Basizität durch Zugabe von CaO-Trägern, d.h. Kalkträgern vorgesehen sein. Bei der bevorzugten Einstellung der Basizität auf Werte von 1,3 bis 1,6 kommt es zur Ausscheidung von Belitkörnern in der Schlackenschmelze, was nach dem Schritt der Kühlung durch Verglasung die Eignung des Endprodukts für die Zementindustrie aufgrund einer hohen hydraulischen Aktivität deutlich verbessert. Bei der Aufarbeitung hochproblematischer Altfasermatten und -stoffe kann das Reaktiv-Metallbad als Vorschmelzaggregat dienen. Das gegebenenfalls beheizte Reaktiv-Metallbad kann neben der Einstellung der Basizität der Schmelze auch sehr bedeutsam für die Einstellung der Temperatur und damit der Viskosität der Schmelze sein.

Die vorliegende Erfindung kann weiters mit Vorteil dahingehend weitergebildet werden, dass das Reaktiv-Metallbad durch Zugabe von Al₂O₃-Trägern zur Einstellung eines Al₂O₃-Gehalts in der Schmelze von 4 Gew.-% bis 18 Gew.-% bereitet wird.

Gemäß einer bevorzugten Ausführungsform der vorliegenden Erfindung wird die Schmelze durch die Wirkung eines mechanischen Desintegrators in das Metallbad hineingedrückt. Dies bedeutet, dass der mechanische Desintegrator, der wie bereits erwähnt bevorzugt als Rotor ausgebildet sein kann, bevorzugt dergestalt ausgelegt ist, dass im Betrieb des Desintegrators eine Art Wirbel entsteht, der in Richtung der Tiefe des Metallbads gerichtet ist und der die am offenen Ende des Tauchrohrs auf das Metallbad treffende Schmelze in das Metallbad hineindrückt. Auf diese Weise werden sehr hohe Scherkräfte auf die zu kühlende Schmelze aufgebracht, was zu einer überaus wirkungsvollen Zerkleinerung der Schmelze führt. Dies fördert eine rasche Abkühlung, was wiederum zur Förderung der Bildung einer beinahe vollständig amorphen Struktur und einer geringen Dichte des Produkts führt. Mit dem erfindungsgemäßen Verfahren kann somit in vorteilhafter Weise ein kugelförmiges Granulat erhalten werden, dass aufgrund seiner feinteiligen Größenverteilung bereits ohne die Notwendigkeit eines Mahlschrittes in der Zementindustrie Verwendung finden kann. Die Bildung von kugelförmigem Granulat erklärt sich aus der großen Differenz von Viskosität und Oberflächenspannung zwischen der eingebrachten Schmelze und dem Metallbad, insbesondere der Zinnbadschmelze. Die eingebrachte Schmelze hat im Falle von Schlackenschmelze eine vergleichsweise niedrige Oberflächenspannung und eine hohe Viskosität verglichen mit der relativ hohen Oberflächenspannung und der geringen Viskosität des Metallbads, insbesondere der Zinnschmelze. Ab einem bevorzugten Verhältnis von Schlacke:Metallbad, insbesondere Schlacke:Zinn, von 1:3,4 umhüllt das Metallbad die Schlackenschmelze und es bildet sich eine Dispersion von Schlacketröpfchen in dem Metallbad, wobei das Metallbad von der Schlackenschmelze jedoch nicht benetzt wird. Aufgrund der eingebrachten Scherkräfte wird die Schlackenschmelze im Metallbad weiter dispergiert und die Schlackenschmelze aufgrund der unterschiedlichen Oberflächenspannungen zu mikrokugelförmiger Gestalt geformt. Hierbei gilt, dass der Schlackenkugeldurchmesser umso kleiner wird, je höher die Temperatur des Metallbads ist und je bedeutender die eingebrachten Scherkräfte sind.

Zum Austragen des amorphen Materials kann das Verfahren bevorzugt dahingehend weitergebildet sein, dass das amorphe Material mithilfe eines Fördermittels ausgewählt aus der Gruppe bestehend aus Förderband und Förderrad ausgebracht wird. Mit dem Förderrad wird das Material von der Oberfläche des Metallbads über einen Rand oder aus einem Austragsbereich der Granuliergießwanne, in dem das Metallbad vorgehalten wird, gefördert und fällt danach in der Regel in einen hier nicht näher beschriebenen Behälter oder eine Rohrleitung und kann weiterbearbeitet oder abgelagert werden.

Gemäß einer bevorzugten Ausführungsform der vorliegenden Erfindung wird das Metallbad mit einem Inertgas, insbesondere Stickstoff gespült. Dies führt zum einen dazu, dass das Metallbad dadurch, dass das Inertgas den Luftsauerstoff von der Oberfläche des Metallbads verdrängt, die Haltbarkeit des Metallbads verlängert wird und zum anderen zu einer Auflockerung des an der Oberfläche des Metallbads schwimmenden amorphen Materials, sodass eventuell an Partikeln des amorphen Materials anhaftendes Zinn besser ablaufen kann. Im Allgemeinen kann somit auf eine spezielle Filtrierung des amorphen Materials bei oder nach der Entnahme aus dem Metallbad verzichtet werden.

Gemäß einer bevorzugten Ausführungsform der vorliegenden Erfindung ist das Verfahren dahingehend weitergebildet, dass das amorphe Material nach dem Ausbringen mit zumindest einer Flüssigkeit ausgewählt aus der Gruppe bestehend aus Wasser, einer wässrigen Schwefelsäurelösung, einer wässrigen Ligninsulfonatlösung und sulfonierten Aromaten, insbesondere Anilin-, Pyridin-, Naphthalin-, Anthracen-, Phenol und/oder Kresolderivaten, besprüht wird, insbesondere bis zu einer Temperatur des verglasten Materials von zwischen 120°C und 250°C, wobei es zu aus dem Stand der Technik bekannten Sulfatierungsreaktionen kommt und wie weiter oben erwähnte Störstoffe entfernt oder umgewandelt werden können. Die gebildeten Schlackenprodukte verbessern insbesondere die Schlackenzementverarbeitung signifikant durch eine massive Reduktion des Mörtel-Wasseranspruches. Dies führt zu einer Erhöhung der Frühfestigkeit sowie der Frostbeständigkeit und Taubeständigkeit der daraus hergestellten Mörtel und Betonsorten. Naturgemäß können auch Mischungen von verdünnter Schwefelsäure und sulfonierten Aromaten eingesetzt werden und so optimal auf den jeweiligen Mörtel- und Betonanwendungsfall eingegangen werden. Derartige Zemente weisen darüber hinaus eine erhöhte Chemikalien- und im Speziellen Sulfatbeständigkeit aus.

Bei dieser Variante der vorliegenden Erfindung werden bevorzugt die beim Besprühen gebildeten Brüden kondensiert und rückgewonnen, um ein Entweichen der Dämpfe in die Arbeitsumgebung und/oder die Atmosphäre zu verhindern und gleichzeitig das Verfahren ökonomischer zu gestalten.

Aufgrund der Oberflächenbeschaffenheit des im Zuge des erfindungsgemäßen Verfahrens hergestellten amorphen Materials, besteht keine Tendenz des Metalls aus dem Metallbad an der granulierten Schmelze anzuhaften. Sollte dies jedoch im Einzelfall aufgrund der Form des Granulats dennoch geschehen, kann das erfindungsgemäße Verfahren mit Vorteil dahingehend weitergebildet sein, dass das amorphe Material zur Entfernung mitgeschleppten Metalls filtriert und/oder zentrifugiert wird.

Die Vorrichtung zur Durchführung des erfindungsgemäßen Verfahrens umfasst eine Granuliergießwanne mit bevorzugt ringförmigem oder rechteckigem Querschnitt zur Aufnahme eines Metallbades, ein Tauchrohr mit einem offenen Ende im für das Metallbad vorgesehenen Granulierbereich der Granuliergießwanne und einen Austragsbereich für das amorphe Material und ist dadurch gekennzeichnet, dass im Bereich des offenen Endes des Tauchrohrs ein mechanischer Desintegrator, bevorzugt Rotor, angeordnet ist.

Bevorzugt ist im Inneren des Tauchrohrs eine in das Metallbad eintauchende Lanze zum Ausstoßen eines Gasstroms geführt und bevorzugt sind im Metallbad im Bereich der Mündung der Lanze Führungseinbauten zur Lenkung einer Strömung angeordnet. Aus der Lanze kann ein Gasstrom aus Inertgasen wie Stickstoff oder CO₂ oder aus reaktiven Gasen wie NH₃, H₂ oder CO in den Bereich des offenen Endes und in die oberste Schicht des Metallbades sowie durch die Führungseinbauten ausgestoßen werden, um durch den entstehenden Sog die Schmelze in das Metallbad zu fördern und gleichzeitig hohen Scherkräften zur Zerkleinerung auszusetzen. Durch die entstehende Strömung wird das gebildete amorphe Material bzw. Granulat aus dem Bereich des offenen Endes des Tauchrohrs gefördert.

Bevorzugt ist aus dem Metallbad eine Lanze zum offenen Ende des in das Metallbad eintauchenden Tauchrohrs zum Ausstoßen eines Gasstroms gerichtet und bevorzugt sind im Metallbad im Bereich der Mündung der Lanze Führungseinbauten zur Lenkung einer Strömung angeordnet. Aus der Lanze kann ein Gasstrom aus Inertgasen wie Stickstoff oder CO₂ oder aus reaktiven Gasen wie H₂, NH₃ oder CO durch die Führungseinbauten in den Bereich des offenen Endes und in die oberste Schicht des Metallbades ausgestoßen werden, um durch den entstehenden Sog die Schmelze in das Metallbad zu fördern und gleichzeitig hohen Scherkräften zur Zerkleinerung auszusetzen. Durch die entstehende Strömung wird das gebildete amorphe Material bzw. Granulat aus dem Bereich des offenen Endes des Tauchrohrs gefördert.

Für das Einbringen der Schmelze kann es vorgesehen sein, dass das Tauchrohr mit einer Austragsöffnung eines die Schmelze aufnehmenden Vorratstundish in Verbindung steht und ein Wehrrohr zur Ausbildung eines gegebenenfalls unterbrochenen Ringraums in die Schmelze eintaucht. Die Ausbildung eines Ringraums entlang des Umfangs eines Wehrrohrs in einem Vorratstundish für die Schmelze führt dazu, dass dann, wenn Schlackenschmelze oder eine ähnliche Schmelze durch den Ringraum in das Tauchrohr tritt, eine Vorzerteilung der Schmelze im Tauchrohr erreicht wird, sodass die Schmelze als relativ dünner Film in das Metallbad eintritt und daher besonders einfach desintegriert werden kann. Das Wehrrohr kann zur Ausbildung eines Ringraums mit einstellbarer Höhe ausgebildet sein, wie dies einer bevorzugten Weiterbildung der vorliegenden Erfindung entspricht, wodurch es in einfacher Weise möglich wird, den Durchfluss der Schmelze durch den Ringraum in das Tauchrohr zu regeln und diesen an die jeweiligen Erfordernisse des Prozesses anzupassen.

Bevorzugt ist in dem Vorratstundish ein Reaktiv-Metallbad, bevorzugt Reaktiv-Zinnbad, vorgehalten, wobei das Reaktiv-Metallbad Reaktivkomponenten ausgewählt aus der Gruppe bestehend aus Kalkträgern und SiO₂-Trägern zur Einstellung der Basizität (CaO/SiO₂) der Schmelze auf eine Zielbasizität von 0,85 bis 1,6, bevorzugt 1,3 bis 1,6, enthält. Die hiermit verbunden Vorteile wurden bereits im Zusammenhang mit dem erfindungsgemäßen Verfahren erläutert.

Weiters bevorzugt enthält das Reaktiv-Metallbad Al₂O₃-Träger zur Einstellung eines Al₂O₃-Gehalts in der Schmelze von 4 Gew.-% bis 18 Gew.-%. Die hiermit verbunden Vorteile wurden bereits im Zusammenhang mit dem erfindungsgemäßen Verfahren erläutert.

Um für eine besonders gründliche Desintegration der Schmelze beim Einbringen in das Metallbad zu sorgen, ist die erfindungsgemäße Vorrichtung bevorzugt dahingehend weitergebildet, dass der mechanische Desintegrator von einer Mehrzahl von zu Rotation antreibbaren Aktoren und von der Wandung der Granuliergießwanne entspringenden Statoren gebildet ist. Wenn die Aktoren zur Rotation angetrieben werden, bewegen sie sich knapp an den Statoren vorbei, sodass in den Bereichen zwischen den Aktoren und den Statoren hohe Scherkräfte im Metallbad auftreten, die zu einer feinteiligen Zerteilung der eingebrachten Schmelze führen. Dies führt wiederum zu besonders rascher Abkühlung der Schmelze im Metallbad und damit zu hochgradig amorphem Material als Endprodukt.

Bevorzugt kann weiters vorgesehen sein, dass die Statoren und/oder die Aktoren zur Abgabe von Inertgas, bevorzugt Stickstoff, in das Metallbad ausgebildet sind. Dies führt zum einen dazu, dass das Inertgas den Luftsauerstoff von der Oberfläche des Metallbads verdrängt und dadurch die Haltbarkeit des Metallbads verlängert wird und zum anderen zu einer Auflockerung des an der Oberfläche des Metallbads schwimmenden amorphen Materials, sodass eventuell an Partikeln des amorphen Materials anhaftendes Zinn besser ablaufen kann. Darüber hinaus kann das Inertgas in gewissem Maß zu einer Kühlung des Metallbads beitragen. Gemäß einer weiteren bevorzugten Ausführungsform sind die Statoren und/oder Aktoren zur Durchführung eines Kühlmittels ausgebildet.

Bevorzugt ist der Gasraum der Granuliergießwanne mit einer Leitung für Inertgas verbunden, sodass der Gasraum der Granuliergießwanne bei Bedarf auch selektiv mit Inertgas, bevorzugt Stickstoff oder Reaktivgas (z.B. H₂, NH₃, CO) gespült werden kann, um die Haltbarkeit des Metallbades zu verlängern.

Die Erfindung wird nachfolgend anhand von in der Zeichnung dargestellten Ausführungsbeispielen näher erläutert. In dieser zeigen
Fig. 1 eine Querschnittsansicht einer ersten Ausführungsform einer Vorrichtung zur Durchführung des erfindungsgemäßen Verfahrens,
Fig. 2 eine Querschnittsansicht entlang der Linie II-II der Fig. 1,
Fig. 3 eine schematische Darstellung einer zweiten Ausführungsform einer Vorrichtung zur Durchführung des erfindungsgemäßen Verfahrens, und
Fig. 4 eine Teilansicht einer dritten Ausführungsform einer Vorrichtung zur Durchführung des erfindungsgemäßen Verfahrens.

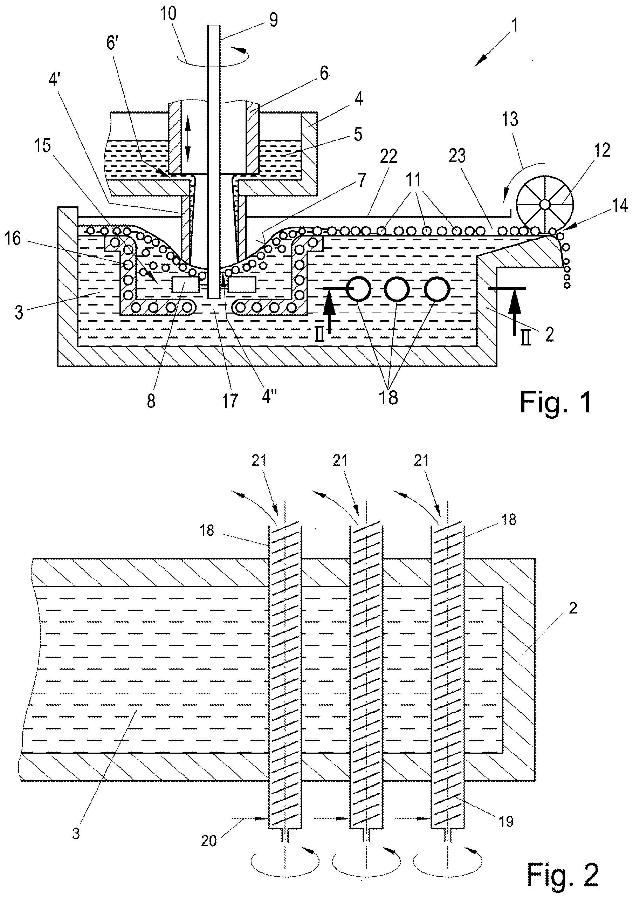

Die Granuliervorrichtung 1 zur Verwendung bei der Durchführung des erfindungsgemäßen Verfahrens umfasst gemäß Fig. 1 und 2 eine Granuliergießwanne bzw. einen Granuliertundish 2, in dem ein Metallbad 3 aus flüssigem Zinn vorgehalten wird. Aus einem Vorratstundish 4, in dem sich die zu verglasende Schmelze 5 befindet, wird die Schmelze 5 mittels eines Wehrrohrs 6, welches zusammen mit dem Vorratstundish 4 einen Ringraum 6' ausbildet, über das offene Ende 4" des Tauchrohrs 4' in den darunterliegenden Granuliertundish 2 mit dem Metallbad 3 dosiert. Die Schmelze 5 trifft als im Wesentlichen hohlzylindrischer Mantel auf die Oberfläche 7 des Metallbads 3 und wird durch die Wirkung des mechanischen Desintegrators bzw. Rotors 8, der mittels der Welle 9 zur Rotation im Sinne des Pfeils 10 angetrieben ist, im Metallbad 3 großen Scherkräften ausgesetzt. Dadurch kommt es zu einer Desintegration der Schmelze 5 im Metallbad, die feinteilig im Metallbad 3 abgekühlt wird und augenblicklich im glasartigen, amorphen Zustand erstarrt und somit granuliert wird. Das Granulat 11 bzw. das amorphe Material 11 wird mit Hilfe des Förderrads 12, welches zur Rotation im Sinne des Pfeils 13 angetrieben ist, im Austragsbereich 14 des Granuliertundish 2 ausgetragen und in einen nicht dargestellten Behälter abgeworfen. Der Granuliertundish 2 weist im Bereich des mechanischen Rotors 8 eine Mischkammer 15 auf, die durch einen Wärmetauscher 16 möglichst gleichbleibend bei einer Temperatur von beispielsweise 300°C gehalten wird. Die Schmelze 5 strömt in die Mischammer 15 und wird dort in das Metallbad 3 eingemischt. Die Mischkammer weist an ihrem Grund eine Öffnung 17 auf, durch die durch die Wirkung des Rotors 8 Zinnschmelze aus dem Metallbad 3 angesaugt wird, was im Bereich des Rotors 8 zu einer Erhöhung der Turbulenz führt, um die Desintegration der Schmelze 5 zu optimieren.

Mit 18 sind Rohre bezeichnet, welche das Metallbad 3 durchsetzen und durch welche organikahältige Altstoffe gefördert werden, um diese zu pyrolysieren. Dabei findet zwischen dem Metallbad 3 und den Altstoffen ein Wärmeaustausch statt, über den der Großteil der durch die Schmelze 5 eingebrachten Wärme aus dem Metallbad 3 abgeführt wird. Die Rohre 18 weisen jeweils eine Fördereinrichtung in Form eines Schneckenförderers 19 auf, welcher die Altstoffe von der Eintragsöffnung 20 zur Austragsöffnung 21 transportiert, während die Altstoffe pyrolysiert werden.

Der Gasraum 23 des Granuliertundish 2 ist mit einer Abdeckung 22 abgedeckt.

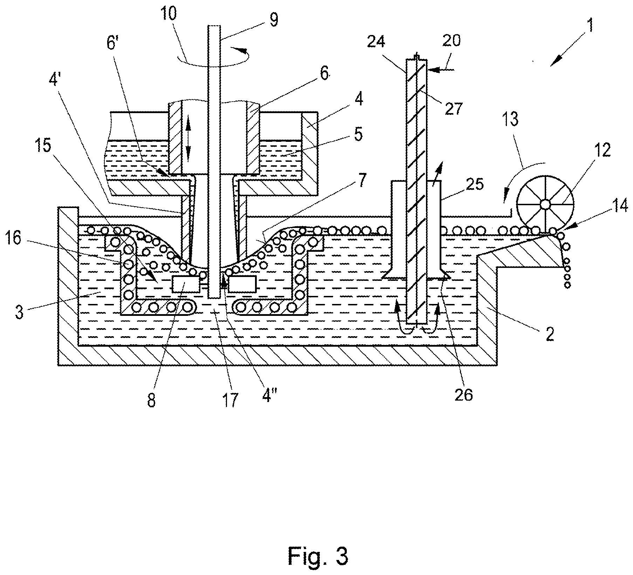

Bei der alternativen Ausbildung gemäß Fig. 3 werden die Altstoffe über ein in das Metallbad 3 eintauchendes Tauchrohr 24 in das Metallbad 3 eingebracht und das im Metallbad 3 entstehende Pyrolysat wird über ein in das Metallbad 3 eintauchendes Steigrohr 25 ausgetragen. Das Steigrohr 25 umgibt das Tauchrohr 24 konzentrisch und weist an seinem in das Metallbad 3 eintauchenden Ende eine glocken- oder trichterförmige Durchmessererweiterung 26 auf. Eine Förderschnecke zum Einbringen der Altstoffe in das Metallbad 3 ist mit 27 bezeichnet.

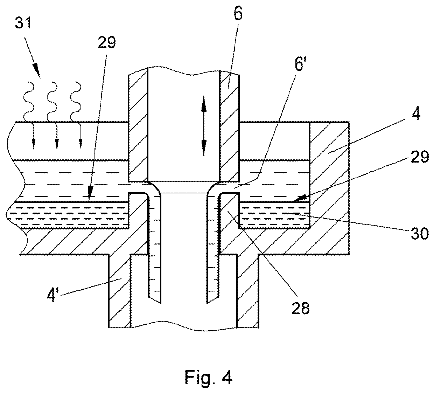

In Fig. 4 ist zu erkennen, dass durch das Vorsehen eines ringförmigen Wehrs 28 ein Volumen 29 für das Vorhalten eines Reaktiv-Metallbads 30 gebildet wird, wobei der Ringraum 6' in diesem Fall zwischen dem Wehr 50 und dem Wehrrohr 6 gebildet wird. Mit den Pfeilen 31 ist versinnbildlicht, dass der Vorratstundish 4 beheizbar ist, falls dies notwendig sein sollte.

## Patentansprüche

1. Verfahren zum Verarbeiten einer nichtmetallischen Schmelze (5), wie z.B. Schlacke, zu amorphem Material (11), bei welchem die Schmelze (5) durch Kühlen verglast wird, wobei die Schmelze (5) zum Verglasen mit einem Metallbad (3) in Kontakt gebracht und anschließend als amorphes Material (11) aus dem Metallbad (3) ausgebracht wird, wobei die Schmelze (5) über ein offenes Ende (4") eines in das Metallbad (3) eintauchenden Tauchrohrs (4') in das Metallbad (3) eingebracht wird und im Metallbad (3), bevorzugt mittels eines mechanischen Desintegrators (8), bevorzugt Rotors (8), aus dem Bereich des offenen Endes (4'') des Tauchrohrs (4') gefördert wird, **dadurch gekennzeichnet, dass** die durch die Schmelze (5) in das Metallbad (3) eingebrachte Wärme zur Pyrolyse wenigstens eines organikahältigen Altstoffs genutzt und dadurch abgeführt wird.

2. Verfahren nach Anspruch 1, **dadurch gekennzeichnet, dass** das Metallbad (3) aus Zinn gebildet wird, das bevorzugt mit bis zu 3 Gew.-% Silber und ggf. mit bis zu 1 Gew.-% Kupfer legiert ist.

3. Verfahren nach Anspruch 1 oder 2, **dadurch gekennzeichnet, dass** der wenigstens eine organikahältige Altstoff durch wenigstens ein das Metallbad durchsetzendes Rohr gefördert wird.

4. Verfahren nach Anspruch 1 oder 2, **dadurch gekennzeichnet, dass** der wenigstens eine organikahältige Altstoff über ein in das Metallbad (3) eintauchendes Tauchrohr (24) in das Metallbad (3) eingebracht und das im Metallbad entstehende Pyrolysat über ein in das Metallbad (3) eintauchendes Steigrohr (25) ausgetragen wird.

5. Verfahren nach Anspruch 4, **dadurch gekennzeichnet, dass** das Steigrohr (25) das Tauchrohr (24) konzentrisch umgibt und an seinem in das Metallbad (3) eintauchenden Ende eine, insbesondere glocken- oder trichterförmige, Durchmessererweiterung (26) aufweist.

6. Verfahren nach einem der Ansprüche 1 bis 5, **dadurch gekennzeichnet, dass** der organikahältige Altstoff wenigstens einen Stoff aus der Gruppe Schadholz, Altholz, Altkunststoffe, Shredder-Leichtfraktion, Klärschlamm, Biomasse, Altreifen, metallhaltiger Schrott und Elektronikschrott umfasst.

7. Verfahren nach einem der Ansprüche 1 bis 6, **dadurch gekennzeichnet, dass** dem wenigstens einen organikahältigen Altstoff vor der Pyrolyse Wasser oder Wasserdampf zugegeben wird, sodass die Pyrolyse als Hydropyrolyse vorgenommen wird und das Pyrolysegut Synthesegas enthaltend H₂, CO, CO₂ und ggf. NH₃ umfasst.

8. Verfahren nach einem der Ansprüche 1 bis 7, **dadurch gekennzeichnet, dass** das Metallbad (3) auf einer Temperatur von 300-600°C gehalten wird.

9. Verfahren nach einem der Ansprüche 1 bis 8, **dadurch gekennzeichnet, dass** das Pyrolysat Pyrolysegas enthält, welches durch Zugabe von O₂ und H₂O zu H₂ und CO vergast wird.

10. Verfahren nach einem der Ansprüche 1 bis 9, **dadurch gekennzeichnet, dass** der wenigstens eine organikahältige Altstoff einen Metallanteil (z.B. Zn, Cu, Pb, Ni, Fe) aufweist und dass das Pyrolysegut oder eine metallhaltige Fraktion davon unter reduzierenden Bedingungen erhitzt wird, vorzugsweise auf eine Temperatur von 1.100-1.300°C, wodurch anorganische Metallverbindungen metallisiert oder verflüchtigt und dann abgetrennt werden.

11. Verfahren nach einem der Ansprüche 1 bis 10, **dadurch gekennzeichnet, dass** die Schmelze (5) einem dem Metallbad (3) vorgeschalteten Reaktiv-Metallbad (30), bevorzugt Reaktiv-Zinnbad (30), aufgegeben wird, wobei das Reaktiv-Metallbad (30) durch Zugabe von Reaktivkomponenten ausgewählt aus der Gruppe bestehend aus Kalkträgern und SiO₂-Trägern zur Einstellung der Basizität (CaO/SiO₂) der Schmelze auf eine Zielbasizität von 0,85 bis 1,6, bevorzugt 1,3 bis 1,6, bereitet wird.

12. Verfahren nach Anspruch 11, **dadurch gekennzeichnet, dass** das Erhitzen des Pyrolyseguts oder der metallhaltigen Fraktion davon durch Aufgabe in das Reaktiv-Metallbad (30) erfolgt.

## Claims

1. Process for processing a non-metallic melt (5), such as slag, into amorphous material (11), in which process the melt (5) is vitrified by cooling, the melt (5) being brought into contact with a metal bath (3) for vitrification and then being removed from the metal bath (3) as amorphous material (11), the melt (5) being introduced into the metal bath (3) via an open end (4") of a submerged pipe (4') which is submerged in the metal bath (3) and being conveyed in the metal bath (3) from the region of the open end (4") of the submerged pipe (4'), preferably by means of a mechanical disintegrator (8), preferably a rotor (8), **characterised in that** the heat introduced into the metal bath (3) by the melt (5) is used for pyrolysis of at least one organic-containing waste material and is thereby dissipated.

2. Method according to claim 1, **characterised in that** the metal bath (3) is formed from tin which is preferably alloyed with up to 3 wt.% silver and optionally with up to 1 wt.% copper.

3. Method according to either claim 1 or claim 2, **characterised in that** the at least one organic-containing waste material is conveyed through at least one pipe which passes through the metal bath.

4. Method according to either claim 1 or claim 2, **characterised in that** the at least one organic-containing waste material is introduced into the metal bath (3) via a submerged pipe (24) which is submerged in the metal bath (3) and the pyrolysate produced in the metal bath is discharged via a riser pipe (25) which is submerged in the metal bath (3).

5. Method according to claim 4, **characterised in that** the riser pipe (25) concentrically surrounds the submerged pipe (24) and has an in particular bellshaped or funnel-shaped diameter extension (26) at its end which is submerged in the metal bath (3).

6. Method according to any of claims 1 to 5, **characterised in that** the organic-containing waste material comprises at least one material from the group of damaged wood, scrap wood, waste plastics materials, shredder light fraction, sewage sludge, biomass, waste tyres, metal-containing scrap and electronic scrap.

7. Method according to any of claims 1 to 6, **characterised in that** water or steam is added to the at least one organic-containing waste material prior to pyrolysis so that pyrolysis is carried out as hydropyrolysis and the pyrolysis product comprises synthesis gas containing H₂, CO, CO₂ and optionally NH₃.

8. Method according to any of claims 1 to 7, **characterised in that** the metal bath (3) is maintained at a temperature of 300 to 600°C.

9. Method according to any of claims 1 to 8, **characterised in that** the pyrolysate contains pyrolysis gas which is gasified by adding O₂ and H₂O to H₂ and CO.

10. Method according to any of claims 1 to 9, **characterised in that** the at least one organic-containing waste material has a metal content (e.g. Zn, Cu, Pb, Ni, Fe) and **in that** the pyrolysis product or a metal-containing fraction thereof is heated under reducing conditions, preferably to a temperature of 1,100 to 1,300°C, as a result of which inorganic metal compounds are metallised or volatilised and then separated.

11. Method according to any of claims 1 to 10, **characterised in that** the melt (5) is fed to a reactive metal bath (30), preferably a reactive tin bath (30), upstream of the metal bath (3), the reactive metal bath (30) being prepared by adding reactive components selected from the group consisting of lime carriers and SiO₂ carriers in order to adjust the basicity (CaO/SiO₂) of the melt to a target basicity of 0.85 to 1.6, preferably 1.3 to 1.6.

12. Method according to claim 11, **characterised in that** the pyrolysis product or the metal-containing fraction thereof is heated by feeding it into the reactive metal bath (30).

## Revendications

1. Procédé de traitement d'une masse fondue non métallique (5), par exemple du laitier, en matériau amorphe (11), dans lequel la masse fondue (5) est vitrifiée par refroidissement, dans lequel, pour la vitrification, la masse fondue (5) est mise en contact avec un bain de métal (3) puis est extrait du bain de métal (3) sous la forme d'un matériau amorphe (11), dans lequel la masse fondue (5) est introduite, par l'intermédiaire d'une extrémité ouverte (4") dans un bain de métal (3) d'un tube plongeur (4') longeant dans le bain de métal (3) et est convoyée, dans le bain de métal (3), de préférence au moyen d'un désintégrateur mécanique (8), de préférence un rotor (8), hors de la zone de l'extrémité ouverte (4") du tube plongeur (4'), **caractérisé en ce que** la chaleur apportée par la masse fondue (5) au bain de métal (3) est utilisée pour la pyrolyse d'au moins une substance usagée contenant des composés organiques et est évacuée.

2. Procédé selon la revendication 1, **caractérisé en ce que** le bain de métal (3) est constitué d'étain, qui est allié de préférence avec jusqu'à 3 % en poids d'argent et, le cas échéant, avec jusqu'à 1 % en poids de cuivre.

3. Procédé selon la revendication 1 ou 2, **caractérisé en ce que** l'au moins une substance usagée contenant des composés organiques est convoyée à travers au moins un tube traversant le bain de métal.

4. Procédé selon la revendication 1 ou 2, **caractérisé en ce que** l'au moins une substance usagée contenant des composés organiques est introduite dans le bain de métal (3) par l'intermédiaire d'un tube plongeur (24) plongeant dans le bain de métal (3) et le pyrolysat qui en résulte dans le bain de métal est évacué par l'intermédiaire d'un tube ascendant (25) plongeant dans le bain de métal (3).

5. Procédé selon la revendication 4, **caractérisé en ce que** le tube ascendant (25) entoure le tube plongeur (24) de manière concentrique et comprend, à son extrémité plongeant dans le bain de métal (3), une extension de diamètre (26), plus particulièrement en forme de cloche ou d'entonnoir.

6. Procédé selon l'une des revendications 1 à 5, **caractérisé en ce que** la substance usagée contenant des composés organiques comprend au moins une substance sélectionnée dans le groupe : bois endommagé, bois usagé, matières plastiques usagées, fraction légère de déchiquetage, boue d'épuration, biomasse, pneus usagés, déchets contenant du métal et déchets électroniques.

7. Procédé selon l'une des revendications 1 à 6, **caractérisé en ce que**, à l'au moins une substance usagée contenant des composés organiques, avant la pyrolyse, est ajoutée de l'eau ou de vapeur d'eau, de sorte que la pyrolyse est effectuée sous la forme d'une hydropyrolyse et le produit de la pyrolyse comprend un gaz de synthèse contenant H₂, CO, CO₂ et, le cas échéant, NH₃.

8. Procédé selon l'une des revendications 1 à 7, **caractérisé en ce que** le bain de métal (3) est maintenu à une température de 300 - 600 °C.

9. Procédé selon l'une des revendications 1 à 8, **caractérisé en ce que** le pyrolysat contient un gaz de pyrolyse qui est gazéifié, par l'ajout de O₂ et H₂O, en H₂ et CO.

10. Procédé selon l'une des revendications 1 à 9, **caractérisé en ce que** l'au moins une substance usagée contenant des composés organiques comprend une part de métal (par exemple Zn, Cu, Pb, Ni, Fe) et **en ce que** le produit de la pyrolyse ou une fraction de celui-ci contenant un métal est chauffé dans des conditions réductrices, de préférence à une température de 1100 - 1 300 °C, ce qui permet de métalliser ou de faire évaporer puis de séparer les composés métalliques inorganiques.

11. Procédé selon l'une des revendications 1 à 10, **caractérisé en ce que** la masse fondue (5) est ajoutée à un bain de métal réactif (30), de préférence un bain d'étain réactif (30), disposé en amont du bain de métal (3), dans lequel le bain de métal réactif (30) est préparé par l'ajout de composants réactifs sélectionnés dans le groupe constitué de : porteurs de calcaire et porteurs de SiO₂ pour l'ajustement de la basicité (CaO/SiO₂) de la masse fondue jusqu'à une basicité cible de 0,85 à 1,6, de préférence de 1,3 à 1,6.

12. Procédé selon la revendication 11, **caractérisé en ce que** le chauffage du produit de la pyrolyse ou de la fraction de celui-ci contenant du métal a lieu par l'ajout de celui-ci au bain de métal réactif (30).
